# EUROPÄISCHE PATENTSCHRIFT

(11) **EP 2 550 930 B1**
(45) Veröffentlichungstag und Bekanntmachung des Hinweises auf die Patenterteilung: **25.08.2021**
(21) Anmeldenummer: 12177872.4
(22) Anmeldetag: 25.07.2012
(51) Int. Cl.: A61C 13/20, F27B 17/02, F27D 21/00

(54) **Dentalofen und Verfahren zu dessen Betrieb**
Dental oven and method for operating thereof
Four dentaire et procédé pour son opération

(30) Priorität: 25.07.2011 EP 11175231
(43) Veröffentlichungstag der Anmeldung: 30.01.2013
(73) Patentinhaber: Ivoclar Vivadent AG, 9494 Schaan (LI)
(72) Erfinder: Rudolf, Jussel, 6805 Feldkirch-Gisingen (AT); Gottfried, Rohner, 9450 Altstätten (CH)
(74) Vertreter: Splanemann

(56) Entgegenhaltungen:
- EP-A1- 1 915 972
- EP-A1- 1 978 321
- EP-A1- 2 105 691
- EP-A2- 2 026 054
- None

## Beschreibung

Die Erfindung betrifft einen Dentalofen, gemäß dem Anspruch 1, sowie ein Verfahren zum Betrieb eines Dentalofens, gemäß dem Anspruch 12.

Dentalöfen für das Brennen von Dentalrestaurationsteilen sind seit langem bekannt. In derartigen Dentalöfen wird ein Dentalrestaurationsteil oder werden eine Mehrzahl von Dentalrestaurationsteilen einem Brennvorgang oder Sintervorgang unterworfen, und zwar nach einem genau vorgegebenen Temperaturprofil.

Die Qualität der erzeugten Dentalrestaurationsteile hängt wesentlich davon ab, dass die vorgesehenen und für das vorhandene Dentalrestaurationsmaterial optimal angepassten Parameter während des Brennens genau eingehalten werden. Hierzu gehören nicht nur das einzuhaltende Temperaturprofil, und zwar nicht im Inneren des Ofens, sondern am Dentalrestaurationsteil selbst, sondern auch die bestehenden Unterdruckverhältnisse während des Brennzyklus.

Zu derartigen Dentalrestaurationsteilen gehören aus Kunststoff, aus Metall, aus Komposit, aber insbesondere auch aus Keramik herzustellende Dentalrestaurationsteile.

Keramische Dentalrestaurationsteile werden häufig in sogenannten Muffeln hergestellt, in denen Hohlformen der exakten Form des späteren Dentalrestaurationsteils als Negativabdruck entsprechen.

Wenn ein Dentalrestaurationsteil gepresst werden soll, wird ein Grünling oder Pressling in den Presskanal eingesetzt, und von einem Pressstempel unter Druck gesetzt. Bei Erwärmung auf die Erweichungstemperatur der Keramik, aus der der Pressling besteht, beginnt sich der Pressling zu erweichen und wird durch Druck auf den Presstempel in die Formhohlräume zur Erzeugung von Dentalrestaurationsteilen eingebracht.

Größere Formhohlräume oder eine größere Anzahl von Formhohlräumen bedingen jedoch eine gewisse Schwächung der Muffel. Daher müssen die Ofenparameter zur Vermeidung von Rissbildungen in der Muffel oder anderen Schädigungen der Dentalrestaurationsteile noch genauer eingehalten werden.

Es ist auch bereits vorgeschlagen worden, wie es aus der DE 10 2006 050 830 A1 ersichtlich ist, zu überwachen, ob die unter Druck stehende Muffel beim Pressen einen Riss zeigt. Diese Erkennung kann jedoch jeweils im Grunde erst im Nachhinein erfolgen, und es wäre wünschenswert, bereits vorab Muffelrisse sicher zu vermeiden.

Um mit einer gewissen Sicherheitsmarge dies zu gewährleisten, werden die erzeugten Muffeln mit einer vorgegebenen und vom Benutzer einzustellenden Presskraft beaufschlagt, die deutlich unterhalb derjenigen Presskraft liegt, bei der Risse auftreten können. Eine reduzierte Presskraft bietet jedoch andererseits das Risiko, dass die dentalen Restaurationsteile zu lange im Brennofen verbleiben müssen, damit die Formhohlräume vollständig ausgefüllt sind, aber auch das Risiko, dass versehentlich vom Benutzer der Pressvorgang abgebrochen wird, weil der Benutzer davon ausgeht, dass der Pressvorgang abgeschlossen ist, etwa, wenn sich der Pressstempel nicht weiter nach unten bewegt. Dies kann insbesondere dann geschehen, wenn eine vergleichsweise hohe Reibung im Schaft vorliegt. Ein mit reduzierter Presskraft betriebener Dentalofen ist anfälliger für derartige Reibungsfehler als ein mit hoher Presskraft betriebener Dentalpressofen.

Ein weiteres Qualitätsproblem liegt darin begründet, dass versehentlich falsche Parameter für den vorzunehmenden Brennvorgang und/oder Pressvorgang eingestellt werden. Dies kann dazu führen, dass eine zu hohe oder eine zu geringe Presskraft, oder eine zu hohe oder zu geringe Brenntemperatur eingestellt wird. Das erzeugte Dentalrestaurationsteil ist dann - meist unerkannt - von schlechter Qualität, ohne dass dies an dem fertigen Dentalrestaurationsteil ohne Weiteres erkennbar wäre. Schäden ergeben sich in diesem Fall verschiedentlich erst nach jahrelanger Benutzung im Mund des Patienten, was dem Zahnarzt oder dem Hersteller des Dentalrestaurationsmaterials angelastet wird, auch wenn tatsächlich der Zahntechniker, der den Pressofen bedient hat, einem Irrtum unterlegen ist.

Moderne Keramiken sind zudem heikel in Bezug auf die exakte Einhaltung der entsprechenden Verarbeitungstemperatur. Ist diese zu gering, wird der Formholharum in der Muffel mit der Keramik nicht oder zumindest nicht vollständig ausgepresst, ist diese zu hoch, sind mangelhafte Oberflächeneigenschaften des so erzeugten Dentalrestaurationsobjektes die Folge.

EP 1978321 A1 offenbart einen Dentalbrennofen mit einem Brennraum und wenigstens einer für in den Brennraum einbringbaren Trägervorrichtung für Dentalmaterial, insbesondere einer Muffel, und insbesondere einer Pressvorrichtung zum Verpressen eines in der Muffel eingesetzten Keramikrohlings, wobei wenigstens eine physikalische Größe des Brennraums und/oder der Trägervorrichtung und/oder des Keramikrohlings erfasst wird. Auf der erfassten physikalischen Größe basiert ein Verarbeitungsprogramm des Dentalofens, der einstellbar ist. Der Dentalofen umfasst einen Temperatursensor, welcher ausgebildet ist die Oberflächentemperatur einer im Brennraum aufgenommenen Muffel zu messen.

Neben der eigentlichen Bedienung der Brenn- und Pressöfen ist die fachgerechte Beschickung derselben mit den zum Brennen bzw. Pressen bestimmten Muffeln ein weiteres Kriterium für die Sicherung einer hohen Fertigungsqualität der Dentalrestaurationsteile.

Vor dem Einbringen einer Muffel in einen Press- oder Brennofen wird eine Muffel zum Vorwärmen regelmäßig in einem separaten Vorwärmofen auf eine Temperatur von üblicherweise 850°C gebracht, wobei hier eine Toleranz von maximal +/- 50°C vorgegeben wird. Für eine, natürlich u.a. von der verwendeten Muffelgröße und deren Material abhängige, Zeitspanne wird die Muffel in einem solchen Vorwärmofen wärmebehandelt. Diese Vorwärmzeit beträgt in der Regel ca. 30 min bis hin zu 90 min, wobei diese Zeit umso länger ist, je größer die Muffel ist. Neben dem eigentlichen Aufwärmen der Muffel ist hierbei auch das Erreichen der nötigen Festigkeit derselben zum sicheren Verpressen des Rohlings in der Muffel von Bedeutung.

Die Temperaturkonstanz eines solchen Vorwärmofens hängt maßgeblich von einer ausreichenden Wartung desselben ab. Ein verschmutztes oder gealtertes Temperaturmesselement beispielsweise kann eine gravierende Abweichung der Ist-Temperatur von der eingestellten gewünschten Temperatur hervorrufen. Auch die gemeinsame Vorwärmung mehrerer Muffeln in einem Ofen, möglicherweise noch verschärft durch mehrmaliges Öffnen des Ofens zum nachträglichen Beschicken oder zum vorzeitigen Entnehmen anderer Muffeln, kann bewirken, dass die gewünschte Vorwärmtemperatur einer Muffel - trotz korrekt eingehaltener Verweildauer - oder auch die Temperaturvergleichmäßigung innerhalb der Muffel nicht in dem Ausmaß gegeben ist, wie es für ein hochqualitatives Brennergebnis erforderlich wäre.

Zudem spielt auch der nachfolgende Vorgang des Umsetzens der Muffel aus dem Vorwärmofen in den eigentlichen Brennofen eine große Rolle für die Gewährleistung einer optimalen Temperatur der Muffel (zum Zeitpunkt des Einbringens in den Brennofen). Nach der Entnahme der Muffel aus dem Vorwärmofen wird durch den Zahntechniker zunächst ein aus dem gewünschten Material bestehender Rohling in den Presskanal der Muffel und (im Falle eines Pressofens) darüber noch ein üblicherweise als Aluminiumoxid oder der Einbettmasse bestehender Pressstempel eingesetzt. Bis zum endgültigen Einbringen der Muffel in den Brennofen verstreicht hierbei, abhängig z.B. von der Erfahrung des Zahntechnikers, eine gewisse Zeit, in der die bereits vorgewärmte Muffel wieder abkühlt.

Bis zum endgültigen Schließen der Ofenhaube des (seinerseits bereits auf bspw. 700°C vorgeheizten) Brennofens und dem Start des Brennprogrammes durch den Zahntechniker bzw. Bediener im Allgemeinen wird sich die Muffel also mit einer vor allem aus der Differenz der Muffeltemperatur und Umgebungstemperatur sowie der Wärmekapazität der Muffel ergebenden Abkühltrate weiter abkühlen. Diese Abkühlung folgt in der Regel einer Exponentialkurve (e-Funktion).

Allgemein gilt, dass sowohl die Dauer der Pressung des Rohlings in die Formhohlräume der Muffel als auch die zahntechnische Qualität der fertig gebrannten Dentalobjekte sich bei langen Umsetzzeiten bereits deutlich verschlechtern, d.h., dass die Objekte z.B. bereits glasige Stellen an der Oberfläche zeigen.

Daraus wird deutlich, dass die Temperatur der Muffel beim Einsetzen in den Brennofen in relativ weiten Grenzen Schwankungen unterworfen ist. Abweichend von der Oberflächentemperatur der Muffel, die ohne weiteres messbar ist, ist es jedoch mit herkömmlichen Mitteln bisher nicht möglich, die Temperatur im Innern der Muffel ausreichend genau zu bestimmen. Diese Temperatur im Innern de Muffel ist jedoch für eine qualitativ hochwertige Pressung die eigentlich maßgebliche Temperatur.

An das Einsetzen der Muffel sowie den Start des Brennprogrammes durch den Zahntechniker schließt sich im Brennofen dann eine weitere Phase der Aufheizung, die so genannte Haltezeit, an, in der die Temperatur des Brennofens und somit auch die Muffeltemperatur auf den für die Verpressung des Rohlings optimalen Wert gebracht werden muss.

Einige keramische Materialien, beispielsweise so genannte "kurze Gläser", besitzen ein sehr enges Temperaturfenster, in welchem eine qualitativ ausreichend gute Verpressung überhaupt möglich ist. Für die erwähnten kurzen Gläser beträgt das Toleranzintervall für die optimale Presstemperatur lediglich +/- 6 K. Selbst bei einer angenommenen hohen Konstanz der Vorwärmtemperatur der Muffel (welche selbst unter optimalen Bedingungen wie einem exakt kalibrierten Vorwärmofen und einer Vorwärmdauer von 60 min noch in einem Bereich von +/- 4 K abweichen kann) verbleibt insofern eine zusätzlich zulässige Abweichung der tatsächlichen von der optimalen Presstemperatur von lediglich +/- 2 K.

Es ist hinlänglich bekannt, dass sowohl die im Vorwärmofen erreichte Vorwärmtemperatur als auch die zum Umsetzen der Muffel (einschließlich des Einsetzens von Pressling und Pressstempel) benötigte Zeit in großem Maße die Temperatur der Muffel - und hierbei vor allem die Temperatur im Innern der Muffel, an der Stelle, an der die Verpressung des Rohlings stattfinden wird - bestimmt. Leider sind jedoch auch diese beiden Parameter (erreichte Vorwärmtemperatur im Vorwärmofen, Gesamtumsetzzeit der Muffel) nicht ohne weiteres exakt zu bestimmen. Eine manuelle Erfassung der Umsetzzeit durch bspw. den Zahntechniker würde diesen von seiner wesentlichen Aufgabe, nämlich dem möglichst zügigen Bestücken und Umsetzen der Muffel, ablenken und ist insofern unpraktikabel, eine automatische Erfassung wird aufgrund von Imkompatibilitäten zwischen Vorwärm- und Brennofen oftmals nicht möglich sein. Die Erfassung der tatsächlich erreichten Vorwärmtemperatur der Muffel ist darüber hinaus, wie bereits weiter oben beschrieben, nicht zuverlässig realisierbar.

Es besteht insofern die dringende Notwendigkeit, gerade im Hinblick auf Materialien wie die erwähnten "kurzen Gläser", die eine sehr hohe Genauigkeit der Einhaltung der Presstemperatur erfordern, die tatsächlich erreichte Temperatur im Innern der Muffel mit einer höchstmöglichen Genauigkeit auf den erwünschten Sollwert zu bringen. Durch die oben beschriebenen Probleme bei der genauen Temperaturbestimmung des Vorwärmofens sowie der verstrichenen Umsetzzeit ist dies bisher jedoch nicht in ausreichendem Maße möglich.

Demgegenüber liegt der Erfindung die Aufgabe zugrunde, einen Dentalofen gemäß dem Oberbegriff von Anspruch 1 und ein Verfahren gemäß dem Oberbegriff von Anspruch 12 zu schaffen, mit welchem die Arbeit im Dentallabor auch bei komplexen Anforderungen und hohen Qualitätserwartungen der Benutzer verbessert wird, ohne dass die Bedienung der Dentalöfen über das in der Praxis relevante Maß hinaus kompliziert würde.

Diese Aufgabe wird erfindungsgemäß durch Anspruch 1 bzw. Anspruch 12 gelöst. Vorteilhafte Weiterbildungen ergeben sich aus den Unteransprüchen.

In experimentellen Messungen wurde überraschend festgestellt, dass sich aus der verhältnismäßig einfach zu messenden Oberflächentemperatur der Muffel zum Zeitpunkt des Einsetzens der Muffel in den Brennraum sehr sicher auf die bereits verstrichene Zeit, die zum Umsetzen der Muffel in den Brennofen, sowie auch auf die im Vorwärmofen tatsächlich erreichte Vorwärmtemperatur der Muffel rückschließen lässt.

Durch die Muffelgröße - in Zusammenhang mit dem verwendeten Material der Einbettmasse für die Herstellung der Muffel und somit dessen spezifischer Wärmekapazität - ist eine reproduzierbare Abkühlrate der Muffel gegeben, welche bei den oben erwähnten Messungen eine bestimmte Abkühlung der entsprechenden Muffel pro Zeiteinheit zur Folge hat.

Die ermittelten Temperaturwerte (Oberflächentemperaturen der Muffel an verschiedenen Positionen, Temperaturen im Innern der Muffel) wurden daraufhin zusammen mit den jeweiligen vorgegebenen Parametern Vorwärmtemperatur, Umsetzzeit und Muffelgröße einer Multiregressionsanalyse unterzogen. Aus den Ergebnissen dieser Regressionsanalyse konnten Wertepaare für die gemessene Oberflächentemperatur, einer daraus ableitbaren (ursprünglichen) Vorwärmtemperatur sowie der ebenfalls ableitbaren Umsetzzeit gebildet werden.

Überraschenderweise zeigten die experimentellen Messungen, dass aus der mithilfe einer Wärmebildkamera gemessenen Oberflächentemperatur (unter Berücksichtigung der Größe der verwendeten Muffel) eindeutige Rückschlüsse sowohl auf die (ursprüngliche) Vorwärmtemperatur der Muffel zum Zeitpunkt des Entnehmens aus dem Vorwärmofen als auch auf die Zeitspanne, die zwischen dem Entnehmen der Muffel aus dem Vorwärmofen und deren Einsetzen in den Brennofen liegt, möglich sind.

Erfindungsgemäß ist es, bei gegebener Muffelgröße, dementsprechend vorgesehen, von der ermittelten Oberflächentemperatur auf die Vorwärmtemperatur und die Umsetzzeit rückzuschließen, und letztendlich so die tatsächlich im Innern der Muffel (an der Stelle des Verpressens des Rohlings) herrschende Temperatur zu bestimmen.

In erfindungsgemäß günstiger Weise soll auf der Grundlage der so ermittelten tatsächlichen Temperatur im Innern der Muffel dann eine Korrektur geeigneter Ofenparameter, beispielsweise eine Anpassung der Haltezeit, vorgenommen werden.

Optional können somit schnellere Pressprozesse realisiert werden, da durch die ermittelten Temperaturwerte eine höhere Genauigkeit der Einhaltung der Temperaturen ermöglicht wird.

Erfindungsgemäß ist es dabei auch von Vorteil, die Temperatur nicht nur an einer Stelle der Muffel, sondern bspw. am oberen und unteren Ende sowie im Zentrum der Muffel(oberfläche) zu erfassen, was durch die Verwendung einer Wärmebildkamera, die ja bauartbedingt eine zweidimensionale Matrix von IR-Sensoren zur Wärmebilderfassung aufweist, ohne Weiteres möglich ist.

Erfindungsgemäß ist es darüber hinaus auch möglich, durch den erreichbaren Kontrast zwischen heißer Muffel und der gegenüber der Muffel recht kühlen Umgebung eine Größenerkennung der Muffel zu realisieren. Durch die dieserart erfassbaren Muffelparameter wie Höhe und Breite ist eine Zuordnung von verschiedenen mithilfe der Wärmebildkamera (also mit bestimmten Pixeln der Kamera) erfassten Temperaturen zu verschiedenen Positionen auf der für die Kamera sichtbaren Oberfläche der Muffel (oben, unten, Zentrum etc.) automatisch möglich, wodurch die bereits angesprochenen verschiedenen lokalen Oberflächentemperaturen (obere Muffeltemperatur, untere Muffeltemperatur, Temperatur in der Mitte der Muffeloberfläche) bereitgestellt werden können.

Durch die neben der eigentlichen Oberflächentemperatur der Muffel ebenfalls erfasste Umgebungstemperatur kann überdies eine weitere Steigerung der Genauigkeit der ermittelten Parameter (Umsetzzeit, Vorwärmtemperatur) realisiert werden, da die Umgebungstemperatur in einem gewissen Ausmaß auch die Abkühlgeschwindigkeit der heißen Muffel mit beeinflusst.

Das so erfasste Wärmebild der Muffel kann in erfindungsgemäß vorteilhafter Weise darüber hinaus auch auf einer an die Steuervorrichtung angeschlossenen Anzeigevorrichtung dargestellt werden, um eine zusätzliche Kontrollmöglichkeit für den bedienenden Zahntechniker bereitzustellen. Heiße Bereiche (die Muffel) werden hierbei im Wesentlichen mit roten Oixeln und kühle Bereiche (die Umgebungsluft) mit im Wesentlichen blauen Pixeln dargestellt. Auch kann über die Erfassung der Höhe und der Breite eine recht genaue Abschätzung der Muffelgröße erfolgen, wenn von einem bspw. vorgewählten Standardmaterial für die Muffel sowie von einer rotationssymmetrischen Form der Muffel ausgegangen wird. Erfindungsgemäß kann die so ermittelte Muffelgröße somit zur automatischen Einstellung der richtigen Basiswerte für die Bestimmung der Umsetzzeit und der Vorwärmtemperatur aus der Muffelersatztemperatur genutzt werden.

Darüber hinaus ist es jedoch auch möglich, die Muffelgröße zwar manuell am Brennofen einzustellen, aber über die mithilfe des erfassten Wärmebildes ermittelte Muffelgröße eine zusätzliche Überprüfung der Plausibilität des manuell eingestellten Wertes zu realisieren und gegebenenfalls ein Signal an den Bediener auszugeben, mit der Aufforderung zur Kontrolle oder auch Korrektur des manuell eingestellten Wertes für die Muffelgröße.

Mithilfe der erfindungsgemäßen Erfassung der Oberflächentemperatur der Muffel, der Muffelersatztemperatur, und auf der Basis des bekannten Muffelmaterials (also der verwendeten Einbettmasse, mit ihrer spezifischen Wärmekapazität) sowie der quasi nebenher erfassten Abmaße der Muffel, welche - wiederum auf der Basis der Annahme einer rotationssymmetrischen Standardform der Muffel - recht genau einen Rückschluss auf das Volumen bzw. die Masse der Muffel und damit auf ihre absolute Wärmekapazität, und damit verbunden, auf ihre spezifische Abkühlung pro Zeiteinheit, ist es also möglich, sehr exakt die Parameter der tatsächlich erreichten Vorwärmtemperatur der Muffel sowie die tatsächlich benötigte Zeit zum Umsetzen und Bestücken der Muffel rückzuschließen.

Über die während der Experimentalphase ermittelten Temperaturen sowohl an verschiedenen Oberflächenpunkten der Muffeln als auch an mehreren Temperaturmesspunkten im Innern der Muffel und die verschiedenen realiserten Umsetzzeiten wurden tabellarisch je für die verschiendenen Standardmuffeln (100g, 200g, 300g etc.) die mithilfe der Wärmebildkamera gemessenen Werte den verschiedenen Muffelgrößen, Vorwärmtemperaturen und Umsetzzeiten zugeordnet. Diese Tabellen sind erfindungsgemäß in der Speichervorrichtung des Brennofens hinterlegt und werden von der Steuervorrichtung zur Ermittlung der tatsächlichen Temperatur im Innern der Muffel benutzt. Die derart ermittelte tatsächliche Temperatur selbst wird nun erfindungsgemäß zur automatischen Korrektur der durch das vorausgewählte Brennprogramm des Ofens vorgegebenen Parameter verwendet.

Zum Beispiel kann aufgrund der erfindungsgemäß ermittelten Muffelersatztemperatur eine Anpassung der Haltezeit des Brennofens für die Aufheizung des Brennofens, dessen Temperatur regelmäßig vor dem Einsetzen der Muffel auf bspw. 700°C gebracht worden ist, vorgenommen werden. Somit kann zum einen sehr exakt die Aufheizung des Ofens auf die gewünschte Press- bzw. Brenntemperatur sowie zum anderen eine ausreichend gute Vergleichmäßigung der Temperaturen an der Oberfläche der Muffel (welche im Wesentlichen der Ofentemperatur entspricht) und im Innern der Muffel erreicht werden.

Darüber hinaus können die Umsetzzeit und die tatsächlich erreichte Vorwärmtemperatur der Muffel, die über die von der Kamera gemessene Oberflächentemperatur der Muffel (Muffelersatztemperatur) auf der Basis der in der Speichervorrichtung in den Tabellen hinterlegten Werte ermittelt worden sind, erfindungsgemäß für die Ausgabe von Fehlersignalen oder Meldungen für den Bediener des Brennofens genutzt werden.

Eine als zu gering ermittelte Vorwärmtemperatur könnte bspw. zur Ausgabe der Fehlermeldung "Vorwärmtemperatur zu gering" führen, und eine als zu lang ermittelte Umsetzzeit dementsprechend zu "Umsetzzeit überschritten". Somit könnte bspw. im ersten Fall eine Überprüfung der tatsächlich erreichten Temperatur des Vorwärmofens angeregt werden (z.B. Nachkalibrierung durch den Hersteller oder Serviceanbieter), oder - im zweiten Fall - ein noch unerfahrener Bediener aufgrund solcher Fehlermeldungen wesentlich besser erkennen, an welchem Punkt der Bedienung der Geräte durch ihn der Ablauf noch optimiert werden könnte.

Eine weitere Möglichkeit besteht in der Erfassung mehrerer Temperaturbilder nacheinander zu gegebenen Zeitpunkten und der Auswertung der so erfassbaren Temperaturdifferenzen pro Zeiteinheit. Da die Abkühlung der Muffel, abhängig von ihrer Größe und der daraus resultierenden Wärmekapazität, einer Exponentialkurve (e-Funktion) folgt, ist über die Ermittlung der Abkühlung der Muffel innerhalb eines bestimmten Zeitabschnitts (oder sogar über mehrere erfasste Abschnitte hinweg) ein Rückschluss auf die bereits verstrichene Umsetzzeit möglich, da die ermittelte Temperaturdifferenz pro Zeiteinheit repräsentativ für das (der e-Funktion folgende) Fortschreiten der Abkühlung ist. Je weiter die Abkühlung (aufgrund einer längeren Umsetzzeit) fortschreitet, umso flacher verläuft zu dem gegebenen Zeitpunkt die Kurve der e-Funktion. Durch die Erfassung mehrerer Temperaturdifferenzen zu bestimmten Zeitpunkten (beispielsweise sekündlich) ist mithilfe einer solcherart erfassten Temperaturmatrix selbstverständlich eine bessere Annäherung bzw. Bestimmung des Kurvenabschnitts der e-Funktion und somit der Umsetzzeit möglich.

Die auf die oben beschriebene Weise ermittelte Umsetzzeit (auf Basis der Temperaturmatrix) kann erfindungsgemäß zur zusätzlichen Gegenprüfung der lediglich mithilfe der Muffelersatztemperatur ermittelten Umsetzzeit (wie weiter vorn, mithilfe der über die Regressionsanalyse erzeugten und in den Tabellen der Speichervorrichtung abgelegten Wertepaare, beschrieben) genutzt werden, wodurch eine größere Zuverlässigkeit der über die Muffelersatztemperatur bestimmten Parameter der Vorwärmtemperatur und letztendlich der tatsächlich im Innern der Muffel vorherrschenden Temperatur gewährleistet werden kann.

Es versteht sich, dass die gesamte zur Erfassung der oben erwähnten Temperaturmatrix nutzbare Zeit die Verweildauer der vorgewärmten Muffel unter der geöffneten Offenhaube nicht verlängern sollte, da dies zu einer weiteren Abkühlung führen würde, die vermieden werden sollte. Jedoch ist der Zeitraum, währenddessen die Ofenhaube während des Vorganges des Schließens derselben noch ausreichend weit geöffnet ist, um den effektiven Erfassungsbereich der Muffel durch die Wärmebildkamera nicht unzulässig stark zu verdecken, ausreichend, um einige Temperaturbildaufnahmen zu erfassen und abzuspeichern.

Insbesondere optische Sensoren haben sehr schnelle Ansprechzeiten im Vergleich z.B. zu Thermoelementen, die hier keine thermisch trägen Massen erwärmt werden müssen und die zu erfassenden Größen sich mit Lichtgeschwindigkeit ausbreiten.

Erfindungsgemäß besonders günstig ist es, einen optischen Sensor einzusetzen, um bestimmte für den Betrieb des Dentalofens relevante Gegebenheiten zu erfassen und basierend auf dem Erfassungsergebnis den Dentalofen entsprechend zu steuern. Hierbei sei unter "optischer Sensor" eine Aneinanderreihung von gleichartigen oder im Wesentlichen gleichartigen strahlungsempfindlichen Elementen zu verstehen.

Bei einer Aneinanderreihung der einzelnen Sensorelemente in zwei Dimensionen ist typischerweise auch eine zweidimensionale Bilderfassung und Abbildung möglich, wie es beispielsweise durch einen CCD-Einheit einer sogenannten Wärmebildkamera realisiert werden, die ihr Empfindlichkeitsmaximum im Infrarotbereich hat.

Erfindungsgemäß besonders günstig ist es, dass mit der erfindungsgemäßen Ausgestaltung des Dentalofens mit optischem Sensor berührungslos gemessen werden kann. Es kann beispielsweise die Oberflächentemperatur an verschiedenen Stellen der Muffel sowie die Größe der Muffel gemessen werden, deren Form oder auch deren Position. Mit dem optischen Sensor, der seinen Messbereich im Wesentlichen im Infrarotbereich hat, ist eine Temperaturmessung möglich, und es ist auch möglich, das Messergebnis über größere Distanzen zu übertragen. Mechanische Verformungen der Muffel oder sonstige Verfälschungen beeinflussen die Messung nicht.

Bei der in vorteilhafter Ausgestaltung vorgesehenen Überwachung ist über eine Anzeigevorrichtung oder in sonstiger geeigneter Form eine Kontrolle des Dentalofens durch den Benutzer möglich. Wenn der optische Sensor auf das Dentalrestaurationsteil oder die Muffel gerichtet ist, erkennt die Steuervorrichtung auch ohne weiteres, wenn die Muffel bzw. das Dentalrestaurationsteil eingebracht wird und entfernt wird.

Es ist denkbar, dass bei Erkennen der Muffel und nach Einstellen der Ofenkopf automatisch geschlossen wird.

Die Überwachung ist nicht auf die Muffel beschränkt. Beispielsweise kann auch die Position eines Aluminiumoxid-Kolbens sowie dessen Temperatur oder die Position des Pressstempels in der Muffel überwacht werden. Dieser muss bekanntlich nach der Pressung tiefer in die Muffel eingetaucht sein, was sich über eine Positionsbestimmung erfassen lässt. Durch die Erfassung der Temperatur des Alox-Kolbens, welcher abhängig von dem verpressenden Material entweder in kaltem oder in ebenfalls vorgewärmten Zustand in die vorgewärmte Muffel eingesetzt wird, kann eine weitere automatische Programmauswahl oder die Ausgabe einer entsprechenden Meldung an den Benutzer erfolgen.

In einer ersten Ausführungsform der erfindungsgemäßen Lösung ist es vorgesehen, dass mit dem optischen Sensor eine Steuervorrichtung für den Dentalofen angesteuert wird. Die Steuervorrichtung löst dann in Abhängigkeit von dem erfassten Temperaturbild oder sonstigem Signalausgang, wie er von dem optischen Sensor übermittelt wird, die gewünschte Funktion aus.

So ist es bei entsprechend hoch auflösender Auslegung der CCD-Einheit auch möglich, das zu behandelnde Objekt zu erkennen. Durch die Bildauswertung besteht die Möglichkeit der automatischen Identifikation von Muffeln. Deren Größe, Form oder dergleichen kann erkannt werden und die Ofensteuerung in geeigneter Weise angepasst werden. Die Steuervorrichtung löst dann das zugehörige Programm aus.

Der erfindungsgemäße optische Sensor kann entweder fest mit dem Gehäuse oder dem Unterteil des Dentalofens verbunden sein, oder über eine geeignete Verbindung, wie beispielsweise eine drahtlose Verbindung, ein elektrisches Kabel oder dergleichen, mit der Steuervorrichtung des Dentalofens verbunden sein.

In vorteilhafter Ausgestaltung der Erfindung ist der erfindungsgemäße optische Sensor als Mehrfachanordnung von einzelnen wärmeempfindlichen Elementen in zwei Dimensionen vorgesehen und speziell darauf abgestimmt, die Oberflächentemperatur an verschiedenen Stellen, aber auch den Durchmesser und die Höhe einer Muffel zu erkennen. Hierzu erstreckt sich die Anordnung mit wärmeempfindlichen Elementen des optischen Sensors sowohl horizontal, entsprechend der vertikalen Aufstellrichtung einer Muffel in einem Dentalofen (zur Ermittlung der Breite bzw. des Durchmesser), sowie vertikal, entsprechend der Ermittlung der Höhe der Muffel. Es ist auch möglich, eine an sich bekannte Temperaturmesskamera einzusetzen, und lediglich eine Zeile und eine Spalte der dort vorgesehenen Matrix auszuwerten. Jedes Erfassungselement entspricht insofern dann einem Pixel. Die Anzahl der Pixel, auf die optische Strahlung oder Wärmestrahlung von der Muffel trifft, lassen bzw. lässt Rückschlüsse über den Durchmesser bzw. die Höhe der Muffel zu. Die erwünschte Genauigkeit ist bereits ausreichend, wenn eine Pixelbreite einem Durchmesserunterschied von beispielsweise 4 mm entspricht.

Basierend auf dem insofern vorliegenden Messergebnis wird die Steuervorrichtung mit der diesbezüglichen Information versorgt, und steuert den Ofen in geeigneter Weise an, beispielsweise, indem für Muffeln mit einer geringeren Vorwärmtemperatur eine längere Haltezeit beim Aufheizen des Brennofens gewählt wird.

Es versteht sich, dass der optische Sensor eine vorgegebenen Position bezogen auf die Muffel einnimmt. Beispielsweise kann die Muffel an einer vorgegebenen Vertiefung im Brennkammerboden abgestellt werden, und der optische Sensor kann fest montiert an dem Ofenunterteil auf die Muffel ausgerichtet sein.

In an sich bekannter Weise ist es möglich, den Bildausschnitt über eine ebenfalls an sich bekannte Zoomoptik zu vergrößern oder zu verkleinern.

In vorteilhafter Ausgestaltung ist es vorgesehen, dass die Steuervorrichtung eine Vergleichsvorrichtung aufweist, die abgespeicherte Bilder mit den erfassten Bildern des optischen Sensors vergleicht. Hierzu gehören beispielsweise bestimmte Muffelgrößen, oder auch bestimmte Größen von Dentalrestaurationen.

Gemäß einer weiteren vorteilhaften Ausgestaltung ist es vorgesehen, dass der Ofenkopf in an sich bekannter Weise von dem Brennraumboden entfernbar, insbesondere gegenüber diesem anhebbar ist und der Sensor auf einen Erfassungsbereich gerichtet ist, der sich zwischen dem Brennraumboden und dem Ofenkopf im geöffneten Zustand des Ofens erstreckt und insbesondere auch die Mittellängsachse des Brennraums abdeckt.

Gemäß einer weiteren vorteilhaften Ausgestaltung ist es vorgesehen, dass der Sensor als Temperaturbilderfassungsvorrichtung ausgebildet ist, mit welcher ein zweidimensionales Temperaturbild der Muffel aufnehmbar ist, dass der Sensor elektromagnetische Wellen in einem Wellenlängenbereich zwischen 700 nm und 18 µm erfasst und insbesondere eine Vielzahl von Einzelsensoren aufweist.

Gemäß einer weiteren vorteilhaften Ausgestaltung ist es vorgesehen, dass die Steuervorrichtung durch in der Speichervorrichtung hinterlegte Werte, die verschiedenen Größen, Umsetzzeiten und Vorwärmtemperaturen der Muffel entsprechen, in Abhängigkeit der von dem Sensor erfassten Oberflächentemperatur der Muffel sowie der erfassten Muffelgröße mindestens einen Parameter des gewählten bzw. eingestellten Verarbeitungsprogramms des Dentalofens steuert.

Gemäß einer weiteren vorteilhaften Ausgestaltung ist es vorgesehen, dass der mindestens eine Parameter des gewählten bzw. eingestellten Verarbeitungsprogramms eine Haltezeit, wobei die Haltezeit als Zeitspanne zwischen dem Start des Verarbeitungsprogramms und dem Zeitpunkt des Erreichens der durch das Verarbeitungsprogramm vorgegebenen optimalen Betriebstemperatur des Dentalofens definiert ist, und/oder eine Haltetemperatur und/oder ein Aufheizgradient ist, wobei der Aufheizgradient als Temperaturänderung ausgehend von einer Anfangstemperatur des Dentalofens zum Zeitpunkt des Starts des Verarbeitungsprogramms bis zu der optimalen Betriebstemperatur des Dentalofens, betrachtet über eine Zeitspanne beginnend mit dem Start des Verarbeitungsprogramms und dem Beginn des Aufheizens bis zum Zeitpunkt des Erreichens der optimalen Betriebstemperatur des Dentalofens, definiert ist.

Gemäß einer weiteren vorteilhaften Ausgestaltung ist es vorgesehen, dass bei Überschreitung voreingestellter Schwellwerte für die ermittelte Umsetzzeit der Muffel vom Vorwärmofen in den Dentalofen und/oder Abweichung der ermittelten Vorwärmtemperatur von der geforderten Vorwärmtemperatur der Muffel die Steuervorrichtung ein Fehlersignal ausgibt.

Gemäß einer weiteren vorteilhaften Ausgestaltung ist es vorgesehen, dass die Steuervorrichtung mit der Speichervorrichtung sowie einer Anzeigevorrichtung verbunden ist, mit welcher Informationen über die Temperatur der Muffel anzeigbar sind, und/oder mit einer Steuervorrichtung für die Steuerung des Dentalofens.

Gemäß einer weiteren vorteilhaften Ausgestaltung ist es vorgesehen, dass mithilfe der Anzeigevorrichtung ein Abbild des von der Temperaturbilderfassungsvorrichtung erfassten Oberflächentemperatur der Muffel darstellbar ist, wobei insbesondere heiße Bereiche des erfassten Temperaturbildes mit im Wesentlichen roten Pixeln und kalte Bereiche des erfassten Temperaturbildes mit im Wesentlichen blauen Pixeln dargestellt werden.

Gemäß einer weiteren vorteilhaften Ausgestaltung ist es vorgesehen, dass mit dem mindestens einen optischen Sensor gleichzeitig mehrere verschiedene Temperaturen erfassbar sind, insbesondere Werte der Oberflächentemperatur am oberen Ende der Muffel, im Zentrum der Muffel und/oder am unteren Ende der Muffel.

Gemäß einer weiteren vorteilhaften Ausgestaltung ist es vorgesehen, dass mithilfe des an die Steuervorrichtung angeschlossenen optischen Sensors eine Muffel hinsichtlich ihrer Größe erkennbar ist, dass die erkannte Größe der Muffel als Parameter in der Speichervorrichtung abspeicherbar ist, und dass die Steuervorrichtung Ofenparameter in Abhängigkeit von der Größe der Muffel festlegt und/oder ein für den Benutzer erkennbares Signal ausgibt.

Gemäß einer weiteren vorteilhaften Ausgestaltung ist es vorgesehen, dass der Sensor als Temperaturbilderfassungsvorrichtung ausgebildet ist, die das aufgenommene Bild zeilenweise und spaltenweise auswertet und basierend auf dem Auswertungsergebnis in einer parallel zum Brennraumboden verlaufenden Breite oder einer vertikal zum Brennraumboden verlaufenden Höhe der Muffel deren Oberflächentemperatur bestimmt, und durch eine Zuordnung von verschiedenen erfassten Oberflächentemperaturwerten zu verschiedenen Bereichen der Muffel verschiedene Messwerte der Oberflächentemperatur, insbesondere "oben", "unten" oder "Zentrum" abzuleiten, insbesondere durch Bestimmung der Anzahl von Pixeln, die der Breite bzw. Höhe des erfassten Gegenstands entsprechen, wobei die Anzahl der Pixel durch Vergleich der dem Gegenstand entsprechenden Pixel gegenüber den dem Hintergrund entsprechenden Pixeln basierend auf einem vorgegebenen Kriterium realisiert ist.

Gemäß einer weiteren vorteilhaften Ausgestaltung ist es vorgesehen, dass das Kriterium zur Bestimmung der Breite bzw. Höhe die Temperaturdifferenz zwischen Muffel und Hintergrund ist.

Gemäß einer weiteren vorteilhaften Ausgestaltung ist ein Verfahren zum Betrieb eines Dentalofens vorgesehen, welcher Dentalofen einen Ofenkopf und einen Brennraumboden aufweist, der für die Aufnahme eines Dentalrestaurationsteils in einer Muffel geeignet ist, wobei wenigstens ein optischer Sensor an dem Dentalofen oder in dessen Nähe angeordnet ist und der Sensor auf die Muffel gerichtet ist, wobei der Sensor ein zweidimensionales Temperaturbild der Muffel aufnimmt und an eine Steuervorrichtung weiterleitet, und dass basierend hierauf der Dentalofen gesteuert und/oder die Temperaturbildinformation angezeigt wird.

Gemäß einer weiteren vorteilhaften Ausgestaltung ist es vorgesehen, dass die Steuerung eine Vorauswahl an Verarbeitungsprogrammen des Dentalofens und/oder die Korrektur mindestens eines Parameters des gewählten Verarbeitungsprogramms umfasst, nachdem die Steuervorrichtung die Oberflächentemperatur des erfassten Gegenstands, insbesondere einer auf dem Brennraumboden abgestellten Muffel, erkannt hat.

Gemäß einer weiteren vorteilhaften Ausgestaltung ist es vorgesehen, dass der Sensor die Oberflächentemperatur der Muffel erfasst und die Steuervorrichtung den Dentalofen in Abhängigkeit von der erfassten Temperatur steuert.

Gemäß einer weiteren vorteilhaften Ausgestaltung ist es vorgesehen, dass der Dentalofen zusätzlich ein in oder an der Brennkammer befindliches Thermoelement aufweist, wobei zusätzlich zu der erfassten Oberflächentemperatur und der erfassten Muffelgröße die von dem Thermoelement erfasste Temperatur im Innern der Brennkammer an die Steuervorrichtung des Dentalofens übertragen wird; und dass die Steuervorrichtung die von dem Thermoelement erfasste Temperatur zusätzlich bei der Korrektur der Parameter des gewählten Verarbeitungsprogramms des Dentalofens, insbesondere der Haltezeit und/oder der Haltetemperatur und/oder des Aufheizgradienten, berücksichtigt.

Weitere Vorteile, Einzelheiten und Merkmale mehrerer Ausführungsbeispiele ergeben sich aus der nachstehenden Beschreibung der Erfindung.

Es zeigen:
- Fig. 1: eine schematische Ansicht einer Ausführungsform eines Details eines erfindungsgemäßen Dentalofens;
- Fig. 2: eine schematische Ansicht eines Details des optischen Sensors zu Fig. 1;
- Fig. 3: eine schematische Ansicht einer weiteren Ausführungsform eines Teils eines erfindungsgemäßen Dentalofens;
- Fig. 4: eine grafische Darstellung des Temperaturverlaufs der Muffel über die Zeit;
- Fig. 5: die experimentelle Messanordnung der Temperatursensoren innerhalb der Muffel; und
- Fig. 6: eine weitere schematisch dargestellte Ausführungsform eines erfindungsgemäßen Dentalofens, in der Darstellung mit geöffneter Ofenhaube.

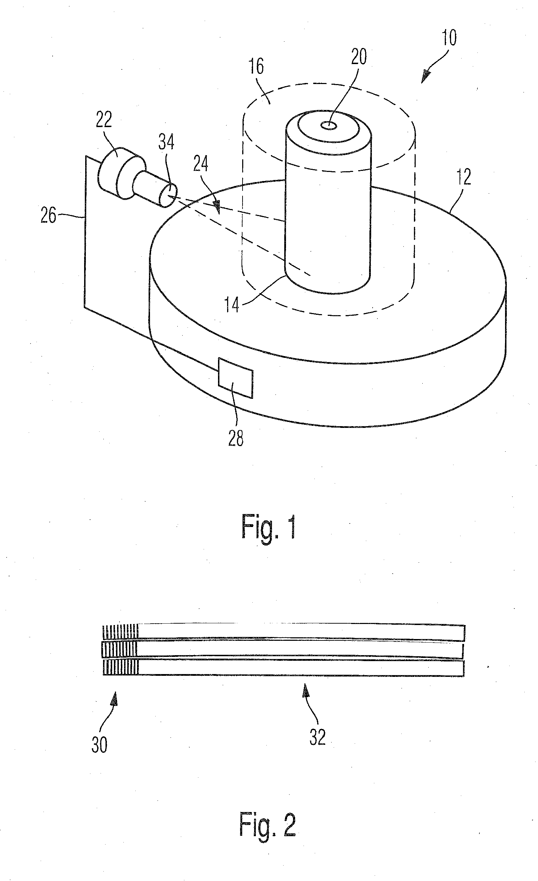

Ein erfindungsgemäßder Dentalofen 10 weist einen Brennraumboden 12 auf, der dafür bestimmt ist, eine Muffel 14 aufzunehmen. Für das Brennen ist die Muffel 14 in einem in Fig. 1 schematisch und gestrichelt angedeuteten Brennraum 16 aufgenommen, der in einer nicht dargestellten Ofenhaube ausgebildet ist.

In dem in Fig. 1 dargestellten Zustand ist die Ofenhaube (einschließlich des Brennraums 16) jedoch angehoben, so dass die Muffel 14 einsehbar ist.

In die Muffel 14 ist in an sich bekannter Weise dafür bestimmt, Dentalrestaurationsteile auszubilden. Hierzu weist sie einen Presskanal 20 auf, der für die Aufnahme eines Pressrohlings und eines Aloxkolbens bestimmt ist. Im Inneren der Muffel 14 sind in ebenfalls an sich bekannter Weise Formhohlräume ausgebildet, die die Dentalrestaurationsteile in ihrer Form festlegen.

Erfindungsgemäß ist seitlich des Brennraums, jedoch knapp über diesem, eine IR-Wärmebildkamera 22 angeordnet. Die Kamera 22 ist in dem dargestellten Ausführungsbeispiel auf die Muffel 14 ausgerichtet, und ihr Erfassungsbereich 24 deckt die maximal mögliche Größe einer Muffel in dem Brennraum 16 ab. In an sich bekannter Weise ist der Erfassungsbereich 24 der Kamera 22 hierzu im Wesentlichen kegelförmig. Die Kamera 22 erfasst damit die Oberflächentemperatur der Muffel sowohl in ihrer gesamten Breite der Muffel 14 als auch in der gesamten Höhe der Muffel 14.

Die Kamera weist einen Ausgangsanschluss 26 auf, der über eine beliebige dafür geeignete Leitung mit einer Steuervorrichtung 28 für den Dentalofen verbunden ist. Die Steuervorrichtung 28 steuert den Dentalofen so, wie es für die erfasste Muffel 14 optimal ist. Wenn beispielsweise eine zu stark abgekühlte Muffel 14 erkannt wird, verlängert sich der Brennzyklus automatisch, um insofern der zu geringen Temperatur der Muffel Rechnung zu tragen und um ein gleichbleibendes Dentalrestaurationsergebnis zu erzielen.

In an sich bekannter Weise ist in der Steuervorrichtung hierzu eine Bilderkennungsvorrichtung vorgesehen, die das von der Kamera erkannte und erfasste Bild auswertet und die Größe der erfassten Muffel insofern als Beurteilungsmaßstab zugrunde legt.

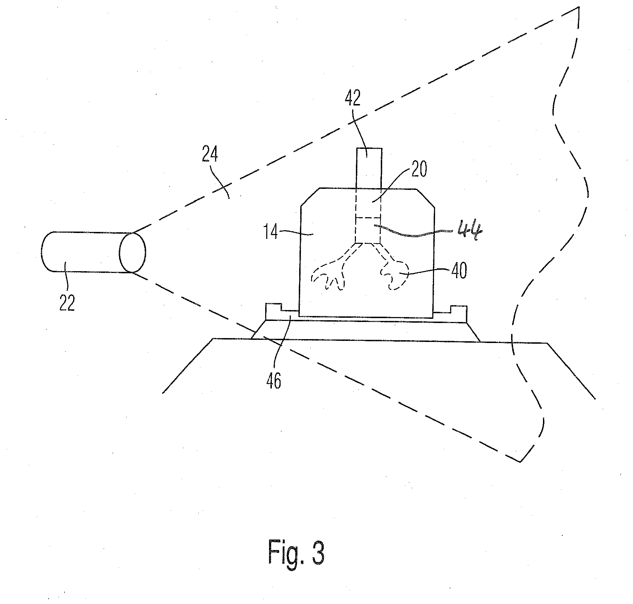

Auch wenn eine Muffeltemperaturerkennung innerhalb des Dentalofens oder, genauer gesagt, oberhalb des Dentalofen-Unterteils vorgesehen ist, versteht es sich, dass in äquivalenter Weise eine Muffeltemperaturerkennung auch außerhalb des Dentalofen-Unterteils vorgesehen werden kann. In bevorzugter Ausgestaltung der Erfindung ist es möglich, die Auswertung sowohl an der Stelle gemäß Fig. 1 vorzunehmen, als auch außerhalb. Hierzu kann die Kamera 22 entweder fest montiert sein, oder separat von dem Dentalofen 10 gelagert sein. Wie dies erfolgen kann, ist schematisch aus Fig. 3 ersichtlich.

In Fig. 2 ist die schematische Anordnung von Einzelerfassungselementen 30 der wärmeempfindlichen Einheit in der Kamera 22 ersichtlich, wobei aus Gründen der Übersichtlichkeit lediglich drei Zeilen der Anordnung dargestellt sind. Es versteht sich, dass die tatsächliche Zeilenanzahl deutlich höher sein wird. Wie ersichtlich ist, ist eine Vielzahl von Einzel-Erfassungselementen 30 neben- und übereinander angeordnet, wobei die minimal erforderliche Auflösung - entsprechend der Anzahl der Einzel-Erfassungselemente - in weiten Bereichen an die Erfordernisse anpassbar ist. Die temperaturempfindliche Einheit 32 gemäß Fig. 2 kann auch Teil einer CCD-Einheit sein, die nach der Art einer Matrix in der Kamera 22 ausgebildet ist.

Die Einzel-Erfassungselemente 30 gemäß Fig. 2 erkennen durch eine Optik 34 der Kamera hindurch, welche Breite bzw. welchen Durchmesser die Muffel 14 hat. Hierzu ist die Bestrahlung der von der Muffel 14 beaufschlagten Einzel-Erfassungselemente 30 anders als diejenige der nicht beaufschlagten. Die Anzahl der beaufschlagten Erfassungselemente 30 entspricht dem Muffeldurchmesser und wird der Steuervorrichtung 28 signalisiert.

Auch außerhalb des Dentalofens 10 kann eine Muffel 14 hinsichtlich ihrer Größe erkannt und eine entsprechende Steuerung des Dentalofens 10 vorgenommen werden.

Aus Fig. 3 ist ersichtlich, wie die Muffel 14 auf einer zum Muffeldurchmesser passenden Brennunterlage 46 abgestellt ist, wodurch die Muffel relativ zur Brennunterlage selbsttätig zentriert wird. Darüber hinaus sind dort sowohl die Formhohlräume 40 als auch ein in den Presskanal 20 der Muffel 14 eingesetzter Rohling 44 - und damit dessen Position innerhalb der Muffel - ersichtlich.

Es versteht sich, dass die Kamera 22 gemäß Fig. 3 symbolisch als schwenkbar dargestellt ist. In der Praxis kann es jedoch günstig sein, eine feste Kamera zu realisieren, die einen Erfassungsbereich aufweist, der sich von dem Dentalofen aus betrachtet nach vorne erstreckt. Die Erfassung muss dann nicht unmittelbar durch die Kamera 22 erfolgen. Vielmehr kann auch ein Reflektor vorgesehen sein, der das erfasste Wärmebild der Kamera 22 zuleitet.

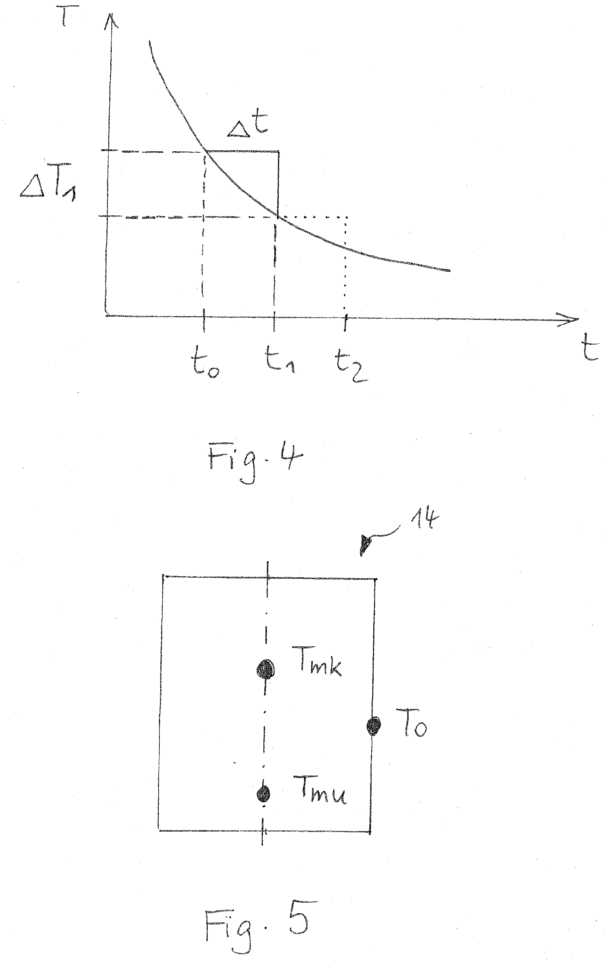

Fig. 4 zeigt ein Diagramm, in dem auf der vertikalen Achse die Muffeltemperatur, auf der horizontalen Achse die Zeit aufgetragen sind. Die Kurve der Temperatur, die hier der gemessenen Oberflächentemperatur der Muffel, also der erfindungsgemäßen Muffelersatztemperatur entspricht, verläuft einer Exponentialfunktion folgend. Abhängig von der Größe der Muffel (z.B. Standardgröße von 100g, 200 g usw.) und der damit verbundenen unterschiedlichen Wärmekapazität der verschiedenen Muffelgrößen verläuft die Kurve der Exponentialfunktion (bei kleinerer Muffelgröße) steiler oder (mit zunehmender Muffelgröße) entsprechend flacher.

Mit fortschreitender Zeit sinkt die Oberflächentemperatur der Muffel, nachdem sie aus dem Vorwärmofen entnommen wurde. Für eine Zeiteinheit (Delta) t - hier die Spanne zwischen t₀ und t₁ - ist in dem Diagramm in Fig. 4 die daraus resultierende Temperaturdifferenz (Delta) T₁, also ein Temperaturabfall der heißen Muffel aufgrund der deutlich geringeren Umgebungstemperatur, gekennzeichnet. Wie aus Fig. 4 klar erkennbar ist, ist die hier gekennzeichnete Temperaturdifferenz (Delta) T₁ repräsentativ für den absoluten Zeitpunkt t₁, da sich zu jedem anderen Zeitpunkt eine andere Temperaturdifferenz (Delta) T für die Zeitspanne (Delta) t ergeben würde. Durch das Abfallen der Kurve würde bspw. zu dem späteren Zeitpunkt t₂ die entsprechende Temperaturdifferenz (Delta) T₂ schon geringer ausfallen. Insofern ist bei ausreichend exakter Messung der Temperaturdifferenz und einem hinlänglich langen Zeitintervall (Delta) t ein sicherer Rückschluss auf den absoluten Zeitpunkt möglich. Dieser absolute Zeitpunkt entspricht erfindungsgemäß der Umsetzzeit der Muffel, gerechnet ab dem Zeitpunkt der Entnahme der Muffel aus dem Vorwärmofen bis zum Einsetzen in den Brennofen.

Durch die Messung mehrerer Temperaturwerte in einem festen Zeitraster, wobei die Werte jeweils nach Verstreichen einer Zeiteinheit (Delta) t erfasst werden, kann eine so genannte Temperaturmatrix aufgestellt werden, aus deren Vielfalt der Messwerte dann eine noch genauere Bestimmung der Zeitpunkte t₀, t₁, t₂ usw. erfolgen kann. Einzelne, aufgrund von Messfehlern oder - ungenauigkeiten resultierende statistische Ausreißer können mit dieser Methode wirksam unterdrückt werden.

Aus Fig 5. ist eine schematische Messanordnung ersichtlich, bei der eine für die experimentelle Temperaturmessung präparierte Muffel einer Standardgröße (bspw. 200 g) im Innern mit zwei Temperaturmessfühlern und außen in Oberflächennähe mit einem weiteren Temperaturmessfühler versehen wurde. Mithilfe dieser präparierten Muffel war es bei den experimentellen Messungen, die die Grundlage für die Ermittlung einer zuverlässigen Kerntemperatur der Muffel auf der Basis der erfindungsgemäß erfassten Muffelersatztemperatur bildeten, möglich, die tatsächlich im Innern der Muffel herrschenden Temperaturen fortlaufend zu erfassen.

In Fig. 5 entspricht die Temperatur T₀ der Muffelersatztemperatur, welche hier im Wesentlichen mittig an der Oberfläche Muffel 14 gemessen wird, die Temperatur Tₘₖ einer ersten Kerntemperatur der Muffel (welche im Wesentlichen an der Position, an der bei einer Muffel, die zur Herstellung eines Dentalrestaurationsteils bestimmt ist, der Rohling zum Verpressen eingesetzt werden würde) sowie die Temperatur Tₘᵤ einer weiteren Kerntemperatur, die im unteren Teil im Innern der Muffel gemessen wird.

Durch die derart vorgenommenen aufwändigen experimentellen Messungen mit verschiedenen Standardmuffelgrößen (100g, 200g etc.), exakt eingehaltenen definierten Vorwärmtemperaturen (bspw. 800°C, 850°C, 900°C) und Umsetzzeiten (bspw. 20 s, 90s) sowie den an den verschiedenen Positionen innerhalb der Testmuffeln angeordneten Temperaturmessfühlern wurden Werte von mit einer IR-Wärmebildkamera ermittelten Oberflächentemperaturen der Muffel und den korrespondierenden Temperaturwerten im Innern der entsprechenden Muffeln ermittelt.

Die aus diesen Messungen gewonnenen Werte für die verschiedenen Kern- und Oberflächentemperaturen konnten, mittels einer vorgenommenen Multiregressionsanalyse, Tabellen (je eine für eine bestimmte Muffelgröße) zugehöriger Werte für die (gemessene) Oberflächentemperatur (also die Muffelersatztemperatur), die Umsetzzeit und die tatsächlich erreichte Vorwärmtemperatur der Muffel und der aus diesen Parametern resultierenden Muffelkerntemperatur erstellt werden, die dann in der Speichervorrichtung des erfindungsgemäßen Dentalofens hinterlegt werden.

Wird nun beispielsweise für eine gegebene Muffelgröße (entweder manuell am Ofen eingegeben oder durch die Abmaße der Muffel über das durch die Kamera erfasste Wärmebild automatisch ermittelt) ein bestimmter Wert für die Muffelersatztemperatur erfasst, wird dieser Wert mit der entsprechenden Tabelle in der Speichervorrichtung verglichen. Der nächstgelegene dort hinterlegte Messwert ergibt entsprechende Werte für die Umsetzzeit, die Vorwärmtemperatur sowie die Muffelkerntemperatur. Es versteht sich, dass diese Werte durch geeignete Interpolationsalgorithmen noch exakter angenähert werden können, wenn die Abweichung der gemessenen Muffelersatztemperatur zu stark von den in der entsprechenden tabelle hinterlegten Werten der Muffelersatztemperatur abweicht.

Mit der so ermittelten Muffelkerntemperatur ist es nun erfindungsgemäß möglich, entsprechende Parameter des gewählten Verarbeitungsprogramms dahingehend zu beeinflussen, dass die Muffelkerntemperatur, welche im Wesentlichen der Temperatur des zu verpressenden Rohlings entspricht, so korrigiert wird, dass sie der durch das gewählte Brennprogramm (mit dem zugrundeliegenden Brennprofil) vorgegebenen optimalen Betriebstemperatur bestmöglich angenähert wird. Eine Möglichkeit der Beeinflussung eines Parameters stellt die so genannte Haltezeit des Brennofens dar.

Ein Beispiel soll dies noch besser verdeutlichen:
Eine Muffel der Standardgröße 200g wurde durch den Zahntechniker korrekt für 60 Minuten in einem Vorwärmofen vorgewärmt. Die Solltemperatur des Vorwärmofens betrug hierbei 850° C, wich aber in der Realität durch mangelhafte Kalibrierung des Vorwärmofens stark von dieser ab, weshalb die Muffel weniger vorgewärmt wurde als gewünscht. Die Muffelkerntemperatur ist dementsprechend geringer als gefordert.

Der Zahntechniker benötigt nun für die Entnahme der Muffel aus dem Vorwärmofen, zum Bestücken derselben mit einem Pressrohling und dem nötigen Alox-Presskolben sowie zum Einsetzen der Muffel in den Pressofen ca. 20 Sekunden. Während dieser Zeit hat sich die heiße Muffel aufgrund der deutlich geringeren Umgebungstemperatur wieder ein wenig abgekühlt.

Beim Einsetzen der fertig bestückten Muffel in den Pressofen wird erfindungsgemäß nun deren Muffelersatztemperatur (also die Oberflächentemperatur) mithilfe einer IR-Kamera erfasst. Auf der Basis der bekannten Muffelgröße ist die Steuereinheit des Pressofens in der Lage, aus der erfassten Muffelersatztemperatur die Umsetzzeit (die mit 20 Sekunden normgerecht war) und die Vorwärmtemperatur (die aufgrund der schlechten Kalibrierung des Vorwärmofens zu gering war) zu ermitteln. Aus diesem Wertepaar ergibt sich darüberhinaus eine Muffelkerntemperatur, die selbstverständlich auch geringer als der für das entsprechende Brennprofil des Pressofens vorausgesetzte Wert ist. Die Steuervorrichtung ist jedoch auf der Basis der nun bekannten Parameter in der Lage, eine Korrektur der vorgesehenen Haltezeit des Pressofens vorzunehmen. Durch Verlängern der Haltezeit kann somit die zu geringe Muffelkerntemperatur beim Einsetzen der Muffel in den Pressofen derart korrigiert werden, dass die am Ende der Haltezeit erreichte Muffelkerntemperatur sehr exakt der für das jeweilige zu verpressende Material des Rohlings erforderlichen Temperatur entspricht.

Gleiches gilt natürlich auch für den Fall, dass zwar die Temperatur des Vorwärmofens exakt eingehalten wurde, aber die Zeit für das Umsetzen der Muffel aufgrund widriger Umstände zu lang ausgefallen (und die Muffel daher stärker als erwartet abgekühlt) ist. Auch hier kann eine Anpassung eines Ofenparameters eine Korrektur der nun zu geringen Muffelkerntemperatur bewirken.

Es versteht sich, dass der zu beeinflussende Ofenparameter entsprechend den Gegebenheiten des Pressofens ausgwählt werden kann. Beispielsweise kann auch eine Anpassung der Heizleistung des Pressofens erfolgen, oder es können andere geeignete Parameter beeinflusst werden. In jedem Falle bewirkt jedoch die Anpassung eines geeigneten Parameters des entsprechenden Brennprogramms eine Korrektur und damit eine sehr exakte Annäherung der tatsächlichen Presstemperatur an die für optimale Pressergebnisse geforderte.

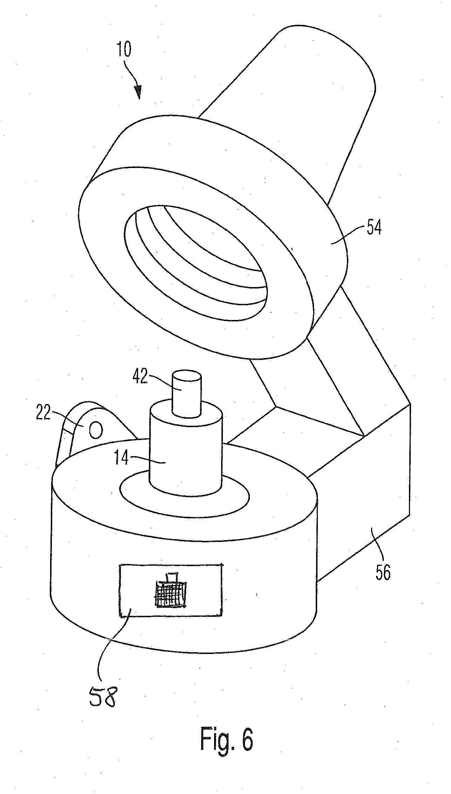

Die Ausgestaltung gemäß Fig. 6 zeigt noch eine Ausführungsform eines erfindungsgemäßen Dentalofens 10 mit Ofenhaube 54. Die Ofenhaube 54 ist so ausgebildet, dass sie für die maximal mögliche Größe der Muffel 14 mit dem (hier nicht sichtbaren) eingebrachten Pressrohling sowie dem eingesteckten Aloxkolben 42 geeignet ist. Die Kamera 22 ist seitlich an dem Ofenunterteil 56 befestigt und zur Muffel 14 hin ausgreichtet. Der Erfassungsbereich der Kamera 22 erlaubt es hier beispielsweise festzustellen, dass die Muffel 14 (mit dem Pressrohling und dem Aloxkolben) nicht die zulässige Größe überschreitet, aber auch, wenn sie nicht an einer Stelle positioniert ist, die beim Schließen der Ofenhaube 56 mit deren Innenseite kollidieren würde. Auf der Anzeigevorrichtung 58 ist zudem ein Kontrollbild der erfassten Muffeltemperaturen zu sehen, wobei auf die Darstellung der regelmäßig ebenfalls erfassten Umgebungstemperatur, die erfindungsgemäß im Wesentlichen mit blauen Pixeln dargestellt werden würde, aus Gründen der Übersichtlichkeit verzichtet wurde.

Weiterhin ist es in erfindungsgemäß vorteilhafter Weise bei bekannter Länge des Aloxkolbens 42 möglich, über die Kamera 22 zu erkennen, welche bzw. wie viele Pressrohlinge (übereinander) in den Presskanal eingesetzt worden sind. Ebenso wie für die Muffelgröße gibt es auch für die Pressrohlinge Standardgrößen (z.B. 3g, 4g, 6g etc.) mit jeweils einer charakteristischen Höhe der Rohlinge. Ein 6g-Rohling ist bspw. doppelt so hoch wie ein 3g-Rohling, und zur Darstellung eines Materialbedarfs von 8g können ebenso zwei 4g-Rohlinge übereinander gestapelt werden. Bei einer ausreichenden geometrischen Auflösung der Kamera 22 ist also auch eine sichere Bestimmung der in den Presskanal eingebrachten Rohlinge und basierend darauf eine weitere Anpassung geeigneter Parameter des Verarbeitungsprogrammes oder der automatischen Auswahl eines geeigneten Programmes als solches möglich.

In einer weiteren erfindungsgemäß günstigen Ausgestaltung ist es möglich, die von einem, aus Gründen der Übersichtlichkeit nicht dargestellten, Thermoelement, welches sich zum Zwecke der Regelung der Temperatur des Dentalofens in der Brennkammer, insbesondere in der Ofenhaube 54, befindet, erfasste Innentemperatur des Dentalofens 10 zusätzlich zu den erfassten Werten der Oberflächentemperatur der Muffel 14 sowie der Muffelgröße bei der Korrektur der Ofenparameter ebenfalls zu berücksichtigen.

Auf diese Weise kann auch die Ofentemperatur des Dentalofens 10 zum Zeitpunkt des Einsetzens der Muffel 14 in den Ofen für die erfindungsgemäße Anpassung der Ofenparameter Berücksichtigung finden. So ist es möglich, auch verschiedene Ausgangsbedingungen des Dentalofens 10 wie bspw. die tatsächliche Ofentemperatur zum Zeitpunkt des Starts des gewählten Verarbeitungsprogramms zu erfassen. Diese Starttemperatur kann, abhängig von der Tatsache, ob dem aktuellen zu startenden Brennprozess bereits eine andere Pressung voranging, in weiten Grenzen, bspw. zwischen 500°C und 900°C schwanken. Durch die zusätzliche Berücksichtigung dieser Ofenstarttemperatur kann eine weitere Verbesserung der Genauigkeit der Einhaltung der Prozesstemperaturen, bei gleichzeitig kürzerer Prozesszeit, erreicht werden.

## Patentansprüche

1. Dentalofen (10) mit einem Ofenkopf (54), einem Brennraum (16) und einem Brennraumboden (12), der für die Aufnahme einer in einem Vorwärmofen vorgewärmten Muffel (14) geeignet ist, mit einer Speichervorrichtung sowie einer Steuervorrichtung (28) zum programmgesteuerten Betrieb des Dentalofens (10),
wobei wenigstens ein optischer Sensor (22) an dem Dentalofen (10) oder in dessen Nähe angeordnet ist, der einen Ausgangsanschluss (26) aufweist, der mit einer Auswertevorrichtung und der Speichervorrichtung verbunden ist,
und der wenigstens eine optische Sensor (22) geeignet ist, die Oberflächentemperatur (T) einer Muffel (14) zu erfassen und die erfasste Oberflächentemperatur (T) an die Auswertevorrichtung zu übertragen,
wobei, wenn eine Muffel (14) im Brennraum (16) aufgenommen ist, der Sensor (22) auf die Oberfläche der Muffel (14) gerichtet ist, **dadurch gekennzeichnet, dass**
die Steuervorrichtung (28) auf der Basis einer gegebenen Muffelgröße sowie des mindestens einen von dem optischen Sensor (22) übertragenen und in der Speichervorrichtung gespeicherten Wertes der erfassten Oberflächentemperatur (T) eingerichtet ist, aus der erfassten Oberflächentemperatur (T) auf eine Vorwärmtemperatur und Umsetzzeit der Muffel (14) rückzuschließen und somit eine tatsächliche Temperatur im Inneren der Muffel (14) zu ermitteln
und dass die Steuervorrichtung (28) eingerichtet ist, durch in der Speichervorrichtung hinterlegte Werte, die verschiedenen Größen, Umsetzzeiten und Vorwärmtemperaturen der Muffel entsprechen, in Abhängigkeit der von dem Sensor erfassten Oberflächentemperatur der Muffel (14) sowie der Muffelgröße mindestens einen Parameter des gewählten bzw. eingestellten Verarbeitungsprogramms des Dentalofens (10) zu steuern,
wobei die Steuervorrichtung (28) eingerichtet ist, mittels der ermittelten Temperatur im Inneren der Muffel (14) mindestens einen der Parameter Haltezeit, Haltetemperatur oder Aufheizgradient eines Verarbeitungsprogramms des Dentalofens (10) zu steuern.

2. Dentalofen nach Anspruch 1, **dadurch gekennzeichnet, dass** der Ofenkopf (54) in an sich bekannter Weise von dem Brennraumboden (12) entfernbar, insbesondere gegenüber diesem anhebbar ist und der Sensor auf einen Erfassungsbereich gerichtet ist, der sich zwischen dem Brennraumboden (12) und dem Ofenkopf (54) im geöffneten Zustand des Ofens (10) erstreckt und insbesondere auch die Mittellängsachse des Brennraums (16) abdeckt.

3. Dentalofen nach einem der vorhergehenden Ansprüche, **dadurch gekennzeichnet, dass** der Sensor (22) als Temperaturbilderfassungsvorrichtung ausgebildet ist, mit welcher ein zweidimensionales Temperaturbild der Muffel (14) aufnehmbar ist, dass der Sensor elektromagnetische Wellen in einem Wellenlängenbereich zwischen 700 nm und 18 µm erfasst und insbesondere eine Vielzahl von Einzelsensoren (30) aufweist.

4. Dentalofen nach Anspruch 3, **dadurch gekennzeichnet, dass** der mindestens eine Parameter des gewählten bzw. eingestellten Verarbeitungsprogramms eine Haltezeit, wobei die Haltezeit als Zeitspanne zwischen dem Start des Verarbeitungsprogramms und dem Zeitpunkt des Erreichens der durch das Verarbeitungsprogramm vorgegebenen optimalen Betriebstemperatur des Dentalofens (10) definiert ist, und/oder eine Haltetemperatur und/oder ein Aufheizgradient ist, wobei der Aufheizgradient als Temperaturänderung ausgehend von einer Anfangstemperatur des Dentalofens (10) zum Zeitpunkt des Starts des Verarbeitungsprogramms bis zu der optimalen Betriebstemperatur des Dentalofens (10), betrachtet über eine Zeitspanne beginnend mit dem Start des Verarbeitungsprogramms und dem Beginn des Aufheizens bis zum Zeitpunkt des Erreichens der optimalen Betriebstemperatur des Dentalofens (10), definiert ist.

5. Dentalofen nach einem der vorhergehenden Ansprüche, **dadurch gekennzeichnet, dass** die Steuervorrichtung (28) bei Überschreitung voreingestellter Schwellwerte für die ermittelte Umsetzzeit der Muffel (14) vom Vorwärmofen in den Dentalofen (10) und/oder Abweichung der ermittelten Vorwärmtemperatur von der geforderten Vorwärmtemperatur der Muffel (14) eingerichtet ist, ein Fehlersignal auszugeben.

6. Dentalofen nach einem der vorhergehenden Ansprüche, **dadurch gekennzeichnet, dass** die Steuervorrichtung (28) mit der Speichervorrichtung sowie einer Anzeigevorrichtung (58) verbunden ist, mit welcher Informationen über die Temperatur der Muffel (14) anzeigbar sind.

7. Dentalofen nach Anspruch 6, **dadurch gekennzeichnet, dass** mithilfe der Anzeigevorrichtung (58) ein Abbild des von der Temperaturbilderfassungsvorrichtung erfassten Oberflächentemperatur der Muffel (14) darstellbar ist, wobei die Anzeigevorrichtung (58) insbesondere eingerichtet ist, heiße Bereiche des erfassten Temperaturbildes mit im Wesentlichen roten Pixeln und kalte Bereiche des erfassten Temperaturbildes mit im Wesentlichen blauen Pixeln darzustellen.

8. Dentalofen nach einem der vorhergehenden Ansprüche, **dadurch gekennzeichnet, dass** mit dem mindestens einen optischen Sensor (22) gleichzeitig mehrere verschiedene Temperaturen erfassbar sind, insbesondere Werte der Oberflächentemperatur am oberen Ende der Muffel (14), im Zentrum der Muffel (14) und/oder am unteren Ende der Muffel (14).

9. Dentalofen nach einem der vorhergehenden Ansprüche, **dadurch gekennzeichnet, dass** mithilfe des an die Steuervorrichtung (28) angeschlossenen optischen Sensors (22) eine Muffel (14) hinsichtlich ihrer Größe erkennbar ist, dass die erkannte Größe der Muffel (14) als Parameter in der Speichervorrichtung abspeicherbar ist, und dass die Steuervorrichtung (28) Ofenparameter in Abhängigkeit von der erkannten Größe der Muffel (14) festlegt und/oder ein für den Benutzer erkennbares Signal ausgibt.

10. Dentalofen nach einem der vorhergehenden Ansprüche, **dadurch gekennzeichnet, dass** der Sensor (22) als Temperaturbilderfassungsvorrichtung ausgebildet und dazu eingerichtet ist, das aufgenommene Bild zeilenweise und spaltenweise auszuwerten und basierend auf dem Auswertungsergebnis in einer parallel zum Brennraumboden (12) verlaufenden Breite oder einer vertikal zum Brennraumboden (12) verlaufenden Höhe der Muffel (14) deren Oberflächentemperatur zu bestimmen, und durch eine Zuordnung von verschiedenen erfassten Oberflächentemperaturwerten zu verschiedenen Bereichen der Muffel (14) verschiedene Messwerte der Oberflächentemperatur, insbesondere "oben", "unten" oder "Zentrum" abzuleiten, insbesondere durch Bestimmung der Anzahl von Pixeln, die der Breite bzw. Höhe des erfassten Gegenstands entsprechen, wobei die Anzahl der Pixel durch Vergleich der dem Gegenstand entsprechenden Pixel gegenüber den dem Hintergrund entsprechenden Pixeln basierend auf einem vorgegebenen Kriterium realisiert ist.

11. Dentalofen nach Anspruch 10, wobei das Kriterium zur Bestimmung der Breite bzw. Höhe die Temperaturdifferenz zwischen Muffel (14) und Hintergrund ist.

12. Verfahren zum Betrieb eines Dentalofens (10),
welcher Dentalofen (10) einen Ofenkopf (54), einen Brennraum (16) und einen Brennraumboden (12) aufweist, der für die Aufnahme eines Dentalrestaurationsteils in einer Muffel (14) geeignet ist,
und der Dentalofen (10) weiterhin eine Speichervorrichtung sowie eine Steuervorrichtung (28) zum programmgesteuerten Betrieb des Dentalofens (10) aufweist,
wobei wenigstens ein optischer Sensor (22) an dem Dentalofen (10) oder in dessen Nähe angeordnet ist und der Sensor (22) auf eine Muffel (14) gerichtet ist, welche im Brennraum (16) aufgenommen ist,
wobei der Sensor (22) die Oberflächentemperatur (T) der Muffel (14) erfasst, wobei der Sensor (22) ein zweidimensionales Temperaturbild der Muffel (14) aufnimmt und an die Steuervorrichtung (28) weiterleitet,
**dadurch gekennzeichnet, dass** der Sensor (22) als Wärmebildkamera ausgestaltet ist,
und dass in der Speichervorrichtung Tabellen hinterlegt sind, wobei in den Tabellen experimentell ermittelten Temperaturen sowohl an verschiedenen Oberflächenpunkten von Muffeln als auch an mehreren Temperaturmesspunkten im Inneren der Muffel und verschiedenen realisierten Umsetzzeiten tabellarisch je für verschiedenen Standardmuffelgrößen die mithilfe der Wärmebildkamera gemessenen Werte den verschiedenen Standardmuffelgrößen, Vorwärmtemperaturen und Umsetzzeiten zugeordnet sind, und
dass die Tabellen von der Steuervorrichtung (28) zur Ermittlung der tatsächlichen Temperatur im Innern der Muffel benutzt werden,
und dass hierauf mittels dieser ermittelten Temperatur im Inneren der Muffel (14) mindestens einer der Parameter Haltezeit, Haltetemperatur oder Aufheizgradient eines Verarbeitungsprogramms des Dentalofens (10) gesteuert wird.

13. Verfahren nach Anspruch 12, **dadurch gekennzeichnet, dass** die Steuerung eine Vorauswahl an Verarbeitungsprogrammen des Dentalofens und/oder die Korrektur mindestens eines Parameters des gewählten Verarbeitungsprogramms umfasst, nachdem die Steuervorrichtung (28) die Oberflächentemperatur eines erfassten Gegenstands, insbesondere einer auf dem Brennraumboden (12) abgestellten Muffel (14), erkannt hat.

14. Verfahren nach Anspruch 12 oder 13, **dadurch gekennzeichnet, dass** der Sensor (22) die Oberflächentemperatur der Muffel (14) erfasst und die Steuervorrichtung (28) den Dentalofen (10) in Abhängigkeit von der erfassten Temperatur steuert.

15. Verfahren nach Anspruch 12 bis 14, **dadurch gekennzeichnet, dass** der Dentalofen (10) zusätzlich ein in oder an der Brennkammer befindliches Thermoelement aufweist, wobei zusätzlich zu der erfassten Oberflächentemperatur und der erfassten Muffelgröße die von dem Thermoelement erfasste Temperatur im Innern der Brennkammer an die Steuervorrichtung (28) des Dentalofens (10) übertragen wird; und wobei
die Steuervorrichtung (28) die von dem Thermoelement erfasste Temperatur zusätzlich bei der Korrektur der Parameter des gewählten Verarbeitungsprogramms des Dentalofens (10), insbesondere der Haltezeit und/oder der Haltetemperatur und/oder des Aufheizgradienten, berücksichtigt.

## Claims

1. A dental oven (10) comprising an oven head (54), a firing chamber (16) and a firing chamber bottom (12) suitable for receiving a muffle (14) preheated in a preheating oven, comprising a storage device as well as a control device (28) for program-controlled operation of the dental oven (10),
wherein at least one optical sensor (22) is arranged on or in the vicinity of the dental oven (10) and has an output connection (26) which is connected to an evaluation device and the storage device, and
the at least one optical sensor (22) is adapted to detect the surface temperature (T) of a muffle (14) and transmit the detected surface temperature (T) to the evaluation device, wherein, when a muffle (14) is received in the firing chamber (16), the sensor (22) is directed to the surface of the muffle (14), **characterized in that**
the control device (28), on the basis of a given muffle size as well as the at least one value of the detected surface temperature (T) transmitted by the optical sensor (22) and stored in the memory device, is arranged to infer a preheating temperature and conversion time of the muffle (14) from the detected surface temperature (T), thus determining an actual temperature in the interior of the muffle (14),
and **in that** the control device (28) is configured to control at least one parameter of the selected or set processing program of the dental oven (10) as a function of the surface temperature of the muffle (14) detected by the sensor and of the muffle size by means of values stored in the storage device which correspond to different sizes, conversion times and preheating temperatures of the muffle,
wherein the control device (28) is configured to control at least one of the parameters holding time, holding temperature or heating gradient of a processing program of the dental oven (10) using the determined temperature inside the muffle (14).

2. The dental oven according to claim 1, **characterized in that** the oven head (54) is removable from the firing chamber floor (12) in a manner known per se, in particular is liftable in relation thereto, and the sensor is directed to a detection zone which extends between the firing chamber floor (12) and the oven head (54) in the state of the oven (10) being opened and in particular also covers the central longitudinal axis of the firing chamber (16).

3. The dental oven according to one of the preceding claims, **characterized in that** the sensor (22) is designed as a temperature imaging device which is used for a two-dimensional temperature image of the muffle (14) to be recordable, **in that** the sensor detects electromagnetic waves in a wavelength range between 700 nm and 18 µm and, in particular, comprises a plurality of individual sensors (30).

4. The dental oven according to claim 3, **characterized in that** the at least one parameter of the selected or set processing program is a holding time, wherein the holding time is defined as the time span between the start of the processing program and the time to reach the optimum operating temperature of the dental oven (10) predetermined by the processing program, and/or a holding temperature and/or a heating gradient, wherein the heating gradient is defined as a temperature change starting from an initial temperature of the dental oven (10) at the time of the start of the processing program up to the optimum operating temperature of the dental oven (10), monitored across a period of time beginning at the start of the processing program and the start of heating up to the time of reaching the optimum operating temperature of the dental oven (10).

5. The dental oven according to one of the preceding claims, **characterized in that** the control device (28) is configured to output an error signal if preset threshold values for the determined transfer time of the muffle (14) from the preheating oven into the dental oven (10) and/or deviation of the determined preheating temperature from the required preheating temperature of the muffle (14) are exceeded.

6. The dental oven according to one of the preceding claims, **characterized in that** the control device (28) is connected to the storage device as well as to a display device (58) which is used for information about the temperature of the muffle (14) to be displayed.

7. The dental oven according to claim 6, **characterized in that** an image of the surface temperature of the muffle (14) detected by the temperature image detection device is representable using the display device (58), wherein the display device (58) is especially configured to display hot areas in the detected temperature image essentially using red pixels and cold areas of the detected temperature image essentially using blue pixels.

8. The dental oven according to one of the preceding claims, **characterized in that** several different temperatures are simultaneously detectable using the at least one optical sensor (22), especially values of the surface temperature at the upper end of the muffle (14), in the center of the muffle (14) and/or at the lower end of the muffle (14).

9. The dental oven according to one of the preceding claims, **characterized in that** a muffle (14) is recognizable with respect to its size using the optical sensor (22) connected to the control device (28), **in that** the recognized size of the muffle (14) is storable as a parameter in the storage device, and **in that** the control device (28) sets oven parameters as a function of the recognized size of the muffle (14) and/or outputs a signal recognizable by the user.

10. The dental oven according to one of the preceding claims, **characterized in that** the sensor (22) is designed as a temperature image acquisition device and is configured to evaluate the recorded image line-wise and column-wise and, based on the evaluation result, determine the surface temperature of the muffle (14) in a width extending parallel to the firing chamber bottom (12) or a height extending vertically to the firing chamber bottom (12), and derive different measured values of the surface temperature, especially "top", "bottom" or "center", by assigning different surface temperature values detected to different regions of the muffle (14), in particular by determining the number of pixels corresponding to the width or height of the detected object, wherein the number of pixels is realized by comparing the pixels corresponding to the object versus the pixels corresponding to the background based on a predetermined criterion.

11. The dental oven according to claim 10, wherein the criterion for determining the width or height is the temperature difference between the muffle (14) and the background.

12. A method of operating a dental oven (10), the dental oven (10) comprising an oven head (54), a firing chamber (16), and a firing chamber floor (12) adapted to receive a dental restoration in a muffle (14), the dental oven (10) further comprising a storage device and a control device (28) for program-controlled operation of the dental oven (10), wherein at least one optical sensor (22) is arranged on the dental oven (10) or in the vicinity thereof and the sensor (22) is directed towards a muffle (14) which is accommodated in the firing chamber (16), wherein the sensor (22) detects the surface temperature (T) of the muffle (14), wherein the sensor (22) records a two-dimensional temperature image of the muffle (14) and forwarding it to the control device (28), **characterized in that** the sensor (22) is designed as a thermal imaging camera and **in that** tables are stored in the storage device, wherein in the tables experimentally determined temperatures both at different surface points of muffles and at several temperature measuring points in the interior of the muffle and different realized conversion times are stored in tabular form for different standard muffle sizes the values measured using the thermal imaging camera for the different standard muffle sizes, preheating temperatures and conversion times are assigned to the various standard muffle sizes, preheating temperatures and conversion times, and **in that** the tables are used by the control device (28) to determine the actual temperature in the interior of the muffle, and **in that** said determined temperature in the interior of the muffle (14) is used to control at least one of the parameters of holding time, holding temperature or heating gradient of a processing program of the dental oven (10).

13. The method according to claim 12, **characterized in that** the control comprises a preselection of processing programs of the dental oven and/or the correction of at least one parameter of the selected processing program after the control device (28) has detected the surface temperature of a detected object, especially of a muffle (14) placed on the firing chamber bottom (12).

14. The method according to claims 12 or 13, **characterized in that** the sensor (22) detects the surface temperature of the muffle (14) and the control device (28) controls the dental oven (10) in dependence on the detected temperature.

15. The method according to claims 12 to 14, **characterized in that** the dental oven (10) additionally has a thermocouple located in or on the firing chamber, wherein in addition to the detected surface temperature and the detected muffle size, the temperature inside the firing chamber detected by the thermocouple is transmitted to the control device (28) of the dental oven (10); and
wherein the control device (28) additionally takes into account the temperature detected by the thermocouple when correcting the parameters of the selected processing program of the dental oven (10), especially the holding time and/or the holding temperature and/or the heating gradient.

## Revendications

1. Four dentaire (10) avec une tête de four (54), une chambre de combustion (16) et un fond de chambre de combustion (12), qui est adapté pour recevoir un moufle (14) préchauffé dans un four de préchauffage, avec un dispositif de stockage ainsi qu'un dispositif de commande (28) pour l'opération commandée par programme du four dentaire (10), où au moins un capteur optique (22) est disposé sur le four dentaire (10) ou à proximité de celui-ci, qui présente un raccord de sortie (26) qui est relié à un dispositif d'évaluation et au dispositif de stockage, et ledit au moins un capteur optique (22) est adapté pour détecter la température de surface (T) d'un moufle (14) et pour transmettre la température de surface (T) détectée au dispositif d'évaluation, où, lorsqu'un moufle (14) est logé dans la chambre de combustion (16), le capteur (22) est dirigé vers la surface du moufle (14), **caractérisé en ce que** le dispositif de commande (28) est disposé, sur la base d'une taille de moufle donnée et de ladite au moins une valeur de la température de surface détectée (T) transmise par le capteur optique (22) et stockée dans le dispositif de stockage, pour déduire à partir de la température de surface détectée (T) une température de préchauffage et un temps de transfert du moufle (14) et ainsi déterminer une température réelle à l'intérieur du moufle (14), et **en ce que** le dispositif de commande (28) est disposé pour commander au moins un paramètre du programme de traitement sélectionné ou réglé du four dentaire au moyen de valeurs enregistrées dans le dispositif de stockage, qui correspondent à différentes tailles, temps de transfert et températures de préchauffage du moufle, en fonction de la température de surface du moufle (14) détectée par le capteur et de la taille du moufle, où le dispositif de commande (28) est disposé pour commander au moins un des paramètres de temps de maintien, de température de maintien ou de gradient de chauffage d'un programme de traitement du four dentaire (10) au moyen de la température déterminée à l'intérieur du moufle (14).

2. Four dentaire selon la revendication 1, **caractérisé en ce que** la tête du four (54) peut être retirée du fond de la chambre de cuisson (12) de manière connue en soi, en particulier peut être soulevée par rapport à celui-ci, et le capteur est dirigé vers une zone de détection qui s'étend entre le fond de la chambre de cuisson (12) et la tête du four (54) à l'état ouvert du four (10) et couvre en particulier également l'axe longitudinal central de la chambre de cuisson (16).

3. Four dentaire selon l'une quelconque des revendications précédentes, **caractérisé en ce que** le capteur (22) est conçu comme un dispositif d'acquisition d'image de température avec lequel une image de température bidimensionnelle du moufle (14) peut être enregistrée, **en ce que** le capteur détecte des ondes électromagnétiques dans une plage de longueur d'onde comprise entre 700 nm et 18 Im et présente en particulier une pluralité de capteurs individuels (30).

4. Four dentaire selon la revendication 3, **caractérisé en ce que** ledit au moins un paramètre du programme de traitement sélectionné ou réglé est un temps de maintien, où le temps de maintien est défini comme l'intervalle de temps entre le début du programme de traitement et le moment d'atteindre la température de fonctionnement optimale du four dentaire (10) prédéterminée par le programme de traitement, et/ou une température de maintien et/ou un gradient de chauffage, où le gradient de chauffage est défini comme un changement de température partant d'une température initiale du four dentaire (10) au moment du début du programme de traitement jusqu'à la température de fonctionnement optimale du four dentaire (10), considéré sur une période de temps commençant avec le début du programme de traitement et le début du chauffage jusqu'au moment d'atteindre la température de fonctionnement optimale du four dentaire (10).

5. Four dentaire selon l'une des revendications précédentes, **caractérisé en ce que** le dispositif de commande (28) est conçu pour émettre un signal d'erreur en cas de dépassement de valeurs de seuil prédéfinies pour le temps de transfert déterminé du moufle (14) du four de préchauffage dans le four dentaire (10) et/ou d'écart entre la température de préchauffage déterminée et la température de préchauffage requise du cylindre de revêtement (14).

6. Four dentaire selon l'une quelconque des revendications précédentes, **caractérisé en ce que** le dispositif de commande (28) est relié au dispositif de stockage ainsi qu'à un dispositif d'affichage (58) avec lequel des informations sur la température du moufle (14) peuvent être affichées.

7. Four dentaire selon la revendication 6, **caractérisé en ce qu'**une image de la température de surface du moufle (14) détectée par le dispositif de détection d'image de température peut être affichée à l'aide du dispositif d'affichage (58), où le dispositif d'affichage (58) est configuré en particulier pour afficher des régions chaudes de l'image de température détectée avec des pixels essentiellement rouges et des régions froides de l'image de température détectée avec des pixels essentiellement bleus.

8. Four dentaire selon l'une des revendications précédentes, **caractérisé en ce que** plusieurs températures différentes peuvent être détectées simultanément avec ledit au moins un capteur optique (22), notamment des valeurs de la température de surface à l'extrémité supérieure du moufle (14), au centre du moufle (14) et/ou à l'extrémité inférieure du moufle (14).

9. Four dentaire selon l'une des revendications précédentes, **caractérisé en ce qu'**un moufle (14) peut être détecté quant à sa taille à l'aide du capteur optique (22) relié au dispositif de commande (28), **en ce que** la taille détectée du moufle (14) peut être stockée comme paramètre dans le dispositif de stockage, et **en ce que** le dispositif de commande (28) définit les paramètres du four en fonction de la taille détectée du moufle (14) et/ou émet un signal qui peut être reconnu par l'utilisateur.

10. Four dentaire selon l'une quelconque des revendications précédentes, **caractérisé en ce que** le capteur (22). est conçu comme un dispositif de capture d'image de température et est configuré pour évaluer l'image capturée ligne par ligne et colonne par colonne et, sur la base du résultat de l'évaluation, pour déterminer la température de surface du moufle (14) dans une largeur s'étendant parallèlement au fond de la chambre de cuisson (12) ou une hauteur s'étendant verticalement au fond de la chambre de cuisson (12), et de dériver différentes valeurs mesurées de la température de surface, en particulier "haut", "bas" ou "centre", en attribuant différentes valeurs de température de surface détectées à différentes zones du moufle (14), en particulier en déterminant le nombre de pixels correspondant à la largeur ou à la hauteur de l'objet détecté, où le nombre de pixels est réalisé en comparant les pixels correspondant à l'objet par rapport aux pixels correspondant à l'arrière-plan sur la base d'un critère prédéterminé.

11. Four dentaire selon la revendication 10, où le critère pour déterminer la largeur ou la hauteur est la différence de température entre le moufle (14) et l'arrière-plan.

12. Procédé de fonctionnement d'un four dentaire (10), où le four dentaire (10) comprenant une tête de four (54), une chambre de cuisson (16) et un fond de chambre de cuisson (12) adapté pour recevoir une restauration dentaire dans un moufle (14), et le four dentaire (10) comprend en outre un dispositif de stockage et un dispositif de commande (28) pour un fonctionnement commandé par programme du four dentaire (10), où au moins un capteur optique (22) est disposé sur le four dentaire (10) ou à proximité de celui-ci et le capteur (22) est orienté vers un moufle (14) logé dans la chambre de combustion (16),où le capteur (22) détecte la température de surface (T) du moufle (14),
où le capteur (22) enregistre une image de température du moufle (14) à deux dimensions et la transmet au dispositif de commande (28),
**caractérisé en ce que** le capteur (22) est conçu comme une caméra à image thermique,
et **en ce que** des tableaux sont stockés dans le dispositif de stockage, dans les tableaux, des températures déterminées expérimentalement aussi bien en différents points de la surface des moufles qu'en plusieurs points de mesure de la température à l'intérieur du moufle et différents temps de conversion réalisés sont attribués sous forme de tableaux, à chaque fois pour différentes tailles de moufles standard, aux valeurs mesurées à l'aide de la caméra thermique aux différentes tailles de moufles standard, aux températures de préchauffage et aux temps de conversion,,
et **en ce que** les tableaux sont utilisés par le dispositif de commande (28) pour déterminer la température réelle à l'intérieur du moufle,
et **en ce que**, sur la base de cette température déterminée à l'intérieur du moufle (14), au moins un des paramètres temps de maintien, température de maintien ou gradient de chauffage d'un programme de traitement du four dentaire (10) est commandé.

13. Procédé selon la revendication 12, **caractérisé en ce que** la commande comprend une présélection de programmes de traitement du four dentaire et/ou la correction d'au moins un paramètre du programme de traitement sélectionné après que le dispositif de commande (28) a détecté la température de surface d'un objet détecté, en particulier d'un moufle (14) placé au fond de la chambre de cuisson (12).

14. Procédé selon la revendication 12 ou 13, **caractérisé en ce que** le capteur (22) détecte la température de surface du moufle (14) et le dispositif de commande (28) commande le four dentaire (10) en fonction de la température détectée.

15. Procédé selon les revendications 12 à 14, **caractérisé en ce que** le four dentaire (10) comporte en outre un thermocouple situé dans ou sur la chambre de cuisson, où la température à l'intérieur de la chambre de cuisson détectée par le thermocouple est transmise au dispositif de commande (28) du four dentaire (10) en plus de la température de surface détectée et de la taille de moufle détectée ; et où le dispositif de commande (28) tient compte en outre de la température détectée par le thermocouple lors de la correction des paramètres du programme de traitement sélectionné du four dentaire (10), en particulier le temps de maintien et/ou la température de maintien et/ou le gradient de chauffage.
